# DEMANDE DE BREVET EUROPEEN

(11) **EP 2 672 592 A1**
(43) Date de publication de la demande: **11.12.2013**
(21) Numéro de dépôt: 13170410.8
(22) Date de dépôt: 04.06.2013
(51) Int. Cl.: H02G 3/04

(54) **Goulotte pour chemin de cables et ensemble comprenant une telle goulotte**

(30) Priorité: 04.06.2012 FR 1255163
(71) Demandeur: Gewiss France SA, 21430 Liernais (FR); CAE - Participations, 91320 Wissous (FR)
(72) Inventeur: Barlerin, Frédéric, 21150 BUSSY LE GRAND (FR); Parizot, Olivier, 91800 BOUSSY SAINT ANTOINE (FR)
(74) Mandataire: Myon, Gérard Jean-Pierre

(57) **Abrégé**

Cette goulotte (2) pour chemin de câbles comprend un fond (22) et au moins une paroi latérale (24) qui comporte au moins une zone (26) de fixation, par coopération de formes, d'un premier connecteur électrique (4).

## Description

La présente invention concerne une goulotte pour chemin de câbles, ainsi qu'un ensemble comprenant une telle goulotte.

Un chemin de câbles comprend généralement plusieurs goulottes mises bout à bout et supportées par des consoles ou des pendards. Les goulottes peuvent être réalisées par pliage de flans de tôle ou par réalisation d'un treillis de fils soudés, le plus souvent métalliques.

Dans certaines utilisations, il est nécessaire de connecter les câbles électriques qui sont disposés dans la goulotte à un terminal de réception. Par exemple, ces câbles électriques peuvent être des câbles-réseau destinés à être raccordés à un ordinateur, une baie de brassage ou tout autre élément capable de recueillir de tels câbles.

Les goulottes sont généralement placées en hauteur et pour raccorder les câbles électriques à un terminal de réception, il est connu d'utiliser un boîtier de connexion intermédiaire qui est accroché sur un support, par exemple à un mur, au chemin de câbles ou au plafond. Le boîtier de connexion intermédiaire est équipé de connecteurs électriques d'entrée, prévus pour être raccordés aux câbles électriques disposés dans la goulotte, ainsi que de connecteurs électriques de sortie, prévus pour être raccordés à des câbles électriques intermédiaires reliés au terminal de réception. Cette solution impose d'utiliser un boîtier de connexion intermédiaire spécifique au type des connecteurs utilisés, ainsi que des câbles intermédiaires, ce qui est coûteux. Cette solution nécessite également l'emploi de matériel pour accrocher le boîtier de connexion intermédiaire sur un support qui doit être raccordé à la mise à la terre afin d'éviter les risques d'électrocution et d'endommagement des éléments sous tension. Par conséquent, le temps de montage d'un tel chemin de câbles est relativement long.

Dans le domaine de l'organisation de la distribution de câbles d'ordinateurs ou équivalents, US-B-6 996 904 enseigne de munir un couvercle d'ouvertures de passage pour des connecteurs, ce couvercle étant rapporté sur une goulotte dans laquelle circulent des câbles. Cette technique utilisée dans un environnement domestique ou tertiaire n'est pas directement transposable au domaine de l'industrie où la plupart des chemins de câble ne sont pas équipés de couvercle.

C'est à ces inconvénients qu'entend plus particulièrement remédier l'invention en proposant une nouvelle goulotte pour chemin de câbles permettant un raccordement aisé et rapide des câbles électriques disposés dans la goulotte à un terminal de réception.

A cet effet, l'invention a pour objet une goulotte pour chemin de câbles, comprenant un fond et au moins une paroi latérale. La paroi latérale comporte au moins une zone de fixation, par coopération de formes, d'un premier connecteur électrique.

Grâce aux premiers connecteurs électriques équipant la goulotte conforme à l'invention, les fils électriques disposés dans la goulotte peuvent être branchés directement à un terminal de réception, sans nécessiter l'emploi d'un boîtier intermédiaire ou de câbles intermédiaires. Le terminal de réception est raccordé directement à la mise à la terre, par l'intermédiaire du chemin de câbles.

Selon les aspects avantageux mais non obligatoires de l'invention, une telle goulotte peut incorporer une ou plusieurs des caractéristiques suivantes, prises en toute combinaison techniquement admissible :
- La zone fixation est constituée par un trou réalisé dans la paroi latérale de la goulotte.
- La zone fixation est constituée par une zone prédécoupée réalisée dans la paroi latérale de la goulotte et prévue pour être évidée.
- La goulotte comporte plusieurs zones de fixation.
- Les zones de fixation sont de dimensions différentes et adaptées à la fixation de connecteurs électriques de différents types.
- Le fond de la goulotte comporte au moins un élément d'attache d'un premier fil électrique ayant une extrémité équipée du premier connecteur électrique.
- L'élément d'attache est constitué par une patte d'attache conçue pour attacher le premier fil électrique au moyen de moyens d'attache rapportés.
- La goulotte est fabriquée par découpage et pliage d'un flan de tôle et en ce que la patte d'attache et/ou la zone de fixation sont formées par découpage de la goulotte.

L'invention concerne également un ensemble, comprenant :
- une telle goulotte,
- au moins un premier fil électrique disposé dans la goulotte et ayant une extrémité équipée du premier connecteur électrique, le premier connecteur électrique étant fixé à la zone de fixation par coopération de formes,
- au moins un second fil électrique ayant une extrémité équipée d'un second connecteur électrique conçu pour être branché au premier connecteur électrique par l'extérieur de la goulotte.

Avantageusement, le premier fil électrique est attaché à l'élément d'attache.

L'invention sera mieux comprise et d'autres avantages de celle-ci apparaîtront plus clairement à la description qui va suivre d'une goulotte pour chemin de câbles et d'un ensemble comprenant une telle goulotte, donnée uniquement à titre d'exemple et faite en se référant aux dessins annexés dans lesquels :
- la figure 1 est une vue partielle en perspective d'un ensemble comprenant une goulotte conforme à l'invention ;
- la figure 2 est une vue partielle en perspective, sous un autre angle, de l'ensemble de la figure 1 ; et
- la figure 3 est une vue, à plus grande échelle, du détail III à la figure 1.

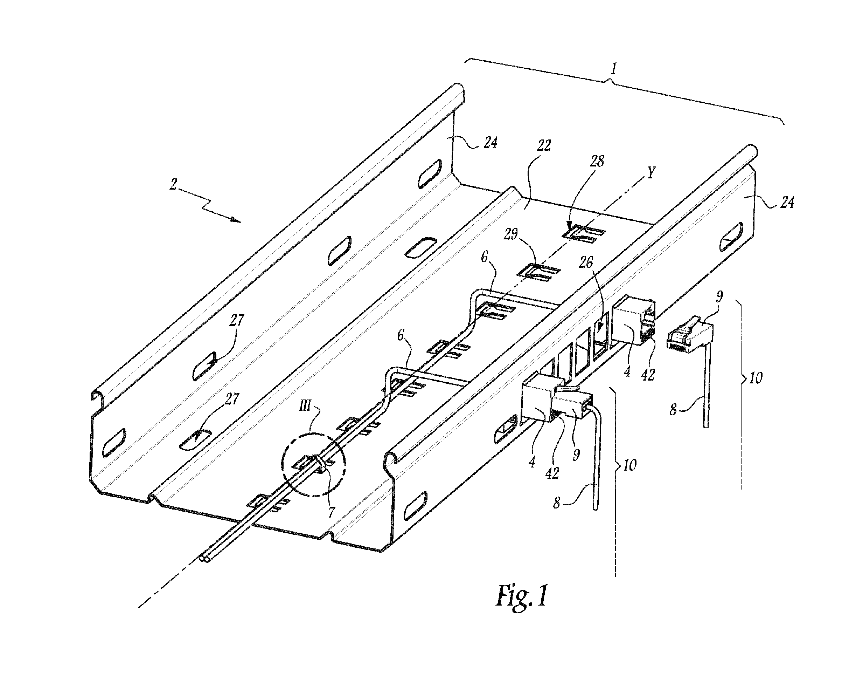

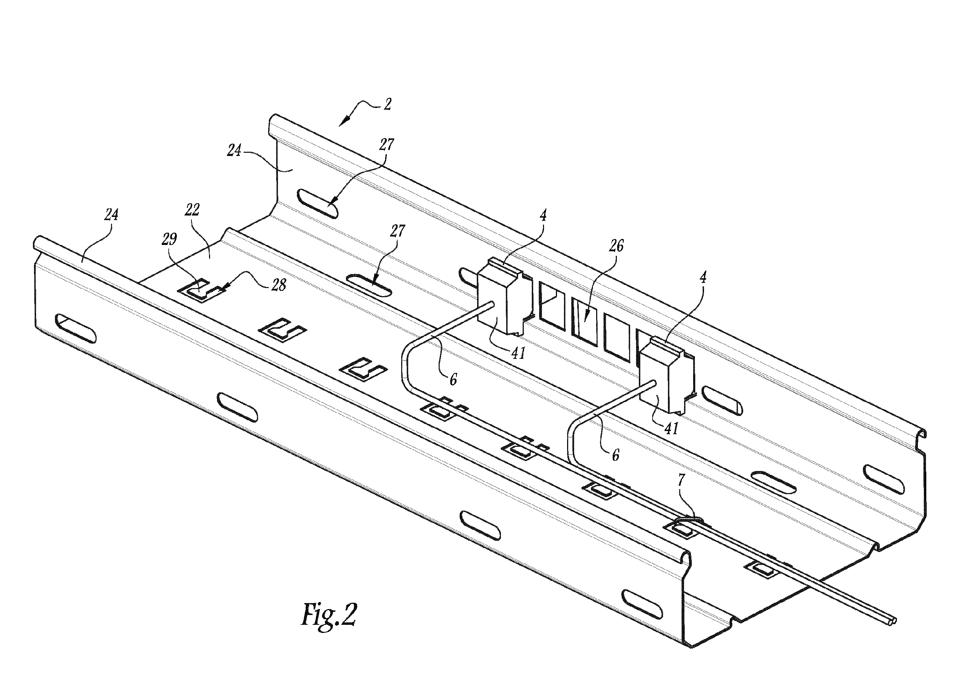

Les figures 1 à 3 montrent un ensemble 1 comprenant une goulotte 2 pour chemin de câbles, deux connecteurs électriques femelle 4 de type RJ45, fixés à la goulotte 2 et raccordés chacun à un fil électrique 6 disposé dans la goulotte 2, ainsi que deux câbles électriques 10 équipés chacun d'un connecteur électrique mâle 9 de type RJ45 prévu pour être branché à l'un des connecteurs femelle 4. Le fil électrique 8 de chaque câble électrique 10 est représenté partiellement sur les figures, et son extrémité opposée au connecteur mâle 9 est équipée d'un connecteur prévu pour être branché directement à un terminal de réception, par exemple à un ordinateur.

La goulotte 2 est monobloc et s'étend selon un axe longitudinal Y et comporte un fond 22 et deux parois latérales 24 globalement parallèles entre elles et perpendiculaires au fond 22. Ainsi, en section transversale perpendiculaire à l'axe Y, la goulotte 2 a un profil en U à fond plat. La longueur de la goulotte 2 peut être modifiée par rapport à l'exemple représenté, en fonction de l'utilisation souhaitée.

La goulotte 2 est prévue pour être fixée à un support non représenté, notamment par l'intermédiaire de consoles ou de pendards non représentés, par exemple au moyen de boulons coopérant avec des ouvertures oblongues 27. La goulotte 2 est réalisée par pliage et découpage d'un flan de tôle et comporte, le long de la paroi latérale 24 située au premier plan à la figure 1, une rangée de six zones vides de fixation ou trous 26 globalement rectangulaires. Les connecteurs femelle 4 sont fixés chacun dans l'un des trous 26 par coopération de formes. De cette manière, il n'est pas nécessaire d'utiliser des moyens de fixation rapportés pour fixer les connecteurs femelle 4 dans les trous 26.

Chaque connecteur femelle 4 comporte une première extrémité 41, disposée à l'intérieur de la goulotte 2, ainsi qu'une deuxième extrémité 42, opposée à l'extrémité 41 et disposée à l'extérieur de la goulotte 2. L'extrémité intérieure 41 de chaque connecteur femelle 4 est raccordée électriquement à l'un des fils électriques 6 qui s'étend à l'intérieur de la goulotte 2, tandis que l'extrémité extérieure 42 est conçue pour être raccordée à l'un des connecteurs mâle 9.

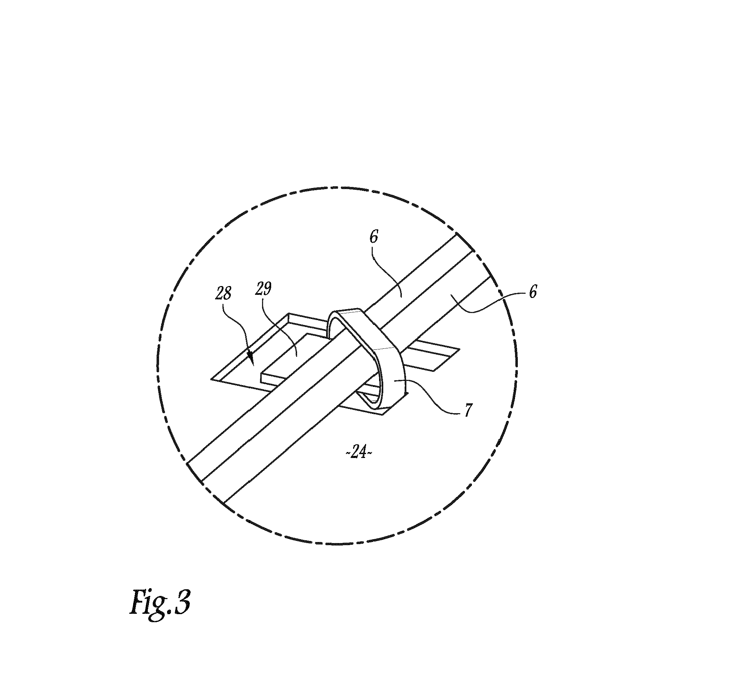

Le fond 22 de la goulotte 2 comporte une rangée longitudinale de découpes 28 en forme de U qui définissent chacune une patte 29 de fixation des fils électriques 6. Comme visible à la figure 3, les fils électriques 6 sont disposés par-dessus l'une des pattes de fixation 29 et un collier de fixation 7 est utilisé pour attacher ensemble les deux fils électriques 6 à la patte de fixation 29.

Pour fabriquer la goulotte 2, un flan de tôle est découpé pour former les découpes 28 et les trous 26 et 27. Puis, le flan de tôle est plié le long des arêtes de raccordement entre le fond 22 et les parois latérales 24, pour former le profil en « U » de la goulotte 2.

Grâce aux trous 26 de fixation des connecteurs femelle 4, les connecteurs femelle 4 peuvent être facilement et rapidement montés sur la goulotte 2 et les câbles électriques 10 peuvent être raccordés directement aux fils électriques 4, sans utiliser un boîtier de connexion intermédiaire ou des câbles électrique auxiliaires pour le raccordement des fils électriques 6 à un terminal de réception. Par exemple, lorsque la goulotte 2 est utilisée pour des câbles réseau, les câbles électriques 10 peuvent être raccordés directement à un ordinateur, de manière facile et rapide.

La paroi latérale 24 peut comporter un seul trou 26, ou un nombre de trous 26 quelconque. L'autre paroi latérale 24 peut également comporter au moins un trou 26.

Dans une autre variante non représentée, la goulotte 2 n'est pas fabriquée à partir d'un flan de tôle plié et découpé. Par exemple, il peut s'agir d'une goulotte en matériau métallique mais aussi PVC, aluminium, polyester ou tout autre matière permettant d'être formée pour l'utilisation de la présente invention.

Le fond 22 de la goulotte 2 peut comporter une ou plusieurs pattes d'attache 29.

En alternative non représentée, les pattes d'attache 29 et les découpes 28 sont remplacées par d'autres éléments d'attache des fils électriques 6, notamment des éléments d'attache ne nécessitant pas l'emploi de moyens d'attache rapportés.

Dans une autre alternative non représentée, les connecteurs électriques 4 ne sont pas de type RJ45. Il peut s'agir de prises à encastrer quelconques, par exemple des connecteurs réseau, des connecteurs pour courant faible ou pour courant fort.

En outre, les trous 26 peuvent être remplacés par des zones pleines prédécoupées destinées à être évidées par défonçage, découpage ou perçage, pour ensuite fixer les connecteurs femelle 4. Les zones prédécoupées peuvent être de différentes dimensions pour permettre la fixation de connecteurs électriques de différents types. Dans ce cas, l'utilisateur choisit de percer les zones prédécoupées qui ont des dimensions correspondant aux connecteurs femelle 4 qu'il souhaite installer. Ainsi, les zones prédécoupées sont percées sélectivement.

Dans le cadre de l'invention, les différentes variantes peuvent être combinées entre elles, au moins partiellement.

## Revendications

1. Goulotte (2) pour chemin de câbles, comprenant un fond (22) et au moins une paroi latérale (24), **caractérisée en ce que** la paroi latérale (24) comporte au moins une zone (26) de fixation, par coopération de formes, d'un premier connecteur électrique (4).

2. Goulotte (2) selon la revendication 1, **caractérisée en ce que** la zone fixation (26) est constituée par un trou réalisé dans la paroi latérale (24) de la goulotte (2).

3. Goulotte (2) selon la revendication 1, **caractérisée en ce que** la zone fixation (26) est constituée par une zone prédécoupée réalisée dans la paroi latérale (24) de la goulotte (2) et prévue pour être évidée.

4. Goulotte (2) selon l'une des revendications précédentes, **caractérisée en ce que** la goulotte (2) comporte plusieurs zones de fixation (26).

5. Goulotte (2) selon la revendication 4, **caractérisée en ce que** les zones de fixation (26) sont de dimensions différentes et adaptées à la fixation de connecteurs électriques (4) de différents types.

6. Goulotte (2) selon l'une des revendications précédentes, **caractérisée en ce que** le fond (22) de la goulotte (2) comporte au moins un élément (29) d'attache d'un premier fil électrique (6) ayant une extrémité équipée du premier connecteur électrique (4).

7. Goulotte (2) selon la revendication 6, **caractérisée en ce que** l'élément d'attache (29) est constitué par une patte d'attache conçue pour attacher le premier fil électrique (6) au moyen de moyens d'attache rapportés (7).

8. Goulotte (2) selon la revendication 7, **caractérisée en ce que** la goulotte (2) est fabriquée par découpage et pliage d'un flan de tôle et **en ce que** la patte d'attache (29) et/ou la zone de fixation (26) sont formées par découpage de la goulotte (2).

9. Ensemble (1), **caractérisé en ce qu'il** comprend :
- une goulotte (2) selon l'une des revendications précédentes,
- au moins un premier fil électrique (6) disposé dans la goulotte (2) et ayant une extrémité équipée du premier connecteur électrique (4), le premier connecteur électrique (4) étant fixé à la zone de fixation (26) par coopération de formes,
- au moins un second fil électrique (8) ayant une extrémité équipée d'un second connecteur électrique (9) conçu pour être branché au premier connecteur électrique (4) par l'extérieur de la goulotte (2).

10. Ensemble (1) selon la revendication 9, **caractérisé en ce qu'il** comprend une goulotte (2) selon l'une des revendications 6 à 8 et **en ce que** le premier fil électrique (6) est attaché à l'élément d'attache (29).
